# EUROPEAN PATENT SPECIFICATION

(11) **EP 2 489 715 B1**
(45) Date of publication and mention of the grant of the patent: **04.06.2014**
(21) Application number: 12153961.3
(22) Date of filing: 04.02.2012
(51) Int. Cl.: C09K 8/68, F17D 1/17, C09K 8/88

(54) **A process for achieving improved friction reduction in hydraulic fracturing and coiled tubing applications in high salinity conditions**
Verfahren zum Erreichen einer verbesserten Abriebreduzierung bei hydraulischen Bruch- und gespulten Leitungsanwendungen unter stark salzhaltigen Bedingungen
Procédure permettant de garantir une réduction améliorée de la friction dans une fracturation hydraulique et applications de tubes en spirale dans des conditions de salinité élevée

(30) Priority: 18.02.2011 CA 2732287
(43) Date of publication of application: 22.08.2012
(73) Proprietor: S.P.C.M. SA, 42160 Andrézieux Bouthéon (FR)
(72) Inventor: Whitwell, Paul, Savannah, GA Georgia 31411 (US); Thorpe, Russell, Brunswick, GA Georgia 31525 (US)
(74) Representative: Denjean, Eric

(56) References cited:
- US-A1- 2003 191 030
- US-A1- 2007 207 933

## Description

### ABSTRACT

This invention relates to a process for achieving enhanced levels of friction reduction in high salinity conditions, particularly suited to slick-water hydraulic fracturing and coiled tubing applications, using low charge and preferably uncharged water soluble high molecular weight polymers.

### BACKGROUND OF INVENTION

During the last decade some extremely large and significant discoveries of natural gas have been made in the United States. The gas in question is known as shale gas and is contained in so-called shale reservoirs, one of the most significant of which is the Barnett Shale of the Fort Worth Basin in North Texas.

The successful development of the Barnett Shale has in turn resulted in further exploration for similar reservoirs, the result of which has been huge new discoveries of shale gas throughout the United States and also in Canada. Among the most significant of these shale gas reservoirs are the Fayetteville Shale, the Haynesville Shale, the Woodford Shale and the Marcellus/Devonian Shale, the latter of which extends for several hundred miles stretching from New York State to Tennessee. It is estimated that these discoveries have pushed US gas reserves up by as much as 60% in the last four years alone. Indeed shale gas promises to be the predominant driving factor in shaping US energy policy in the coming decades. For example the US Energy Information Administration now predicts that nearly 50% of all new power plant additions from 2008 through 2035 will be fired by natural gas.

It is important to recognize however that the successful exploitation of these low permeability shale gas plays would not have been possible without the introduction of several new stimulation technologies which were pioneered in the Barnett Shale. As a result of these new technologies it is estimated that the Barnett Shale experienced a growth rate in excess of 3000% between 1998 and 2007. Amongst the most important of these new technologies are horizontal drilling and slickwater hydraulic fracturing, which taken together have enabled the development of shale plays to be economically viable. Horizontally drilled wells are now standard practice, with each well being fractured in multiple stages. A typical fracturing operation might involve six to nine fracture stages per well and might involve the injection of as much as five to ten million gallons of water as the fracturing fluid. The extremely rapid injection under high pressure of this large volume of water causes fracturing of the shale, thereby leading to a significant increases in permeability of the formations which in turn allows the trapped shale gas to be recovered.

It is standard practice to treat this water with a polymeric friction reducer in order to reduce the hydraulic horsepower required to inject this water rapidly into the shale formations. Use of such polymers, which are known as friction reducers, can reduce pressure losses due to internal friction within the fluid by as much as 70%. Typically, these polymers are anionically charged copolymers of polyacrylamide with a degree of anionicity in the region of 30 mol %.

As a result, of the rapid growth of hydraulic fracturing, and with each fracture typically consuming several million gallons of water, concerns have been raised as to the ready availability of sufficient fresh water to allow the continued economic development of the shale plays. In light of this potential shortage of fresh water, it is becoming increasingly clear that in the future fracturing fluids will increasingly be based on waters which contain significant amounts of dissolved salts. Indeed, this situation already exists in many areas. The US 5 067 508 patent discloses the use of a water soluble polymer as friction reducer in saline fluids. A wide range of natural and synthetic polymers are presented, and the salts content in the saline fluids does not exceed 45 mg/l.

Against this backdrop, the industry is going to require friction reducers which function effectively in high brines, some of which might contain dissolved salts in the range of 100,000 mg/l, or even 500,000 mg/l total dissolved solids (i.e. 10%-50% in weight total salt concentration). The present invention described below comprises a polymeric friction reducer which gives superior performance under such conditions of very high salinity.

### SUMMARY OF INVENTION

It has been surprisingly discovered in the case of slick-water hydraulic fracturing operations for which the injected fluids have a total dissolved salt (TDS) concentration above 100,000 and more preferably above 150,000 mg/l, that the use of low charge or preferably non-ionic polymers as friction reducers during pumping operations provides improved levels of friction reduction.

Similarly for those coiled tubing work-over operations, which in turn involve the use of high density, high salinity brines it has been found to be unexpectedly advantageous to utilize non-ionic or low charge polymers as friction reducers.

Coiled tubing work-over operations are conducted to either repair or stimulate an existing production well in order to restore, prolong or enhance production. These techniques include hydraulic fracturing and wellbore cleanout; both of which profit from the addition of friction reducers.

Accordingly, the present invention provides, in a general sense, a process for obtaining enhanced levels of friction reduction in oilfield and gas-field applications such as hydraulic slick-water fracturing and coiled tubing work-over operations, where very high salinity brine conditions may occur. Specifically, the enhanced levels of friction reduction come about from the unexpectedly high levels of friction reduction observed in brines of elevated salinity, for example high density calcium chloride brines used in completion fluids, by the use of small additions of low charge and preferably uncharged, water soluble high molecular weight polymers.

### DETAILED DESCRIPTION OF INVENTION

The process of the invention is suitable for the treatment of very high salinity slick-water fluid systems, resulting in an enhanced level of friction reduction, significantly superior to those achieved using conventional friction reducers. The very high salinity injected fluids have a total dissolved salt (TDS) concentration above 100,000 mg/l, preferably above 150,000 mg/l. The reduction of friction in numerous oilfield and gas-field applications is an ongoing issue. In an effort to reduce friction in high pressure pumping operations, additives of various polymeric compounds have been employed to different degrees of success. Presently, the industry standard for friction reduction in the oilfield is an acrylamide-sodium acrylate copolymer (70:30 molar ratio) with a molecular weight close to 15 million.

Typical stimulation techniques employed in tight gas formations use water as the main transport fluid and as a result, high injection pressures are encountered due to the frictional pressure losses associated with high pumping rates. Mitigation of these high friction loss induced pressures can generally be achieved by the addition of very low concentrations of high molecular weight conventional friction reducers, commonly referred to in the industry as a slick-water fluid system.

Due to the size of these slick-water operations, and the rate at which the injection takes place, a significant volume of water is required to complete each stage of a hydraulic fracture. A fresh supply of water is not always easily accessible for these slick-water fracturing operations due to a number of factors including location and environmental regulations, however; with the present invention, a previously unsuitable water source now becomes a viable option for slick-water fracturing: flow back water and blends thereof.

The flow back water consists mainly of fracturing fluid returning to the surface along with some produced water. The injected fracturing fluid, which typically contains fresh water, will tend to dissolve salts in the formation thus giving the recovered water its salinity.

The high salinity water comes from:
- connate water which represents the water that was trapped in the pores of a rock during the formation of the rock. It can be dense and saline;
- produced water, a naturally occurring (formation) water which is generally very saline; and
- synthetic high density brines employed in coiled tubing applications such as wellbore cleanout in order to provide increased hydrostatic pressure.

During the course of any slick-water fracturing operation, a significant volume of water is injected into the formation. This water eventually flows back to the surface along with the gas from the formation. The flow back water typically contains among other things, high concentrations of salts from the formation and has to be subjected to numerous expensive treatments prior to disposal. One goal of this invention is to make use of this flow back water as a replacement or partial replacement for fresh/surface water for slick-water fracturing operations. The main drawback for the use of flow back water in slick-water fracturing, is that the very high concentrations of salts significantly reduce the effectiveness of conventional friction reducers. It also generates increased injection pressures due to the higher densities and dynamic viscosities.

It has now been unexpectedly discovered that friction reducers comprising nonionic and low ionic charge polymers, provide significant improvements over conventionally used friction reducing compounds in the presence of very high salinity, such as those found in produced water and work-over fluids.

The present invention concerns a process for reducing the fluid flow friction in hydraulic fracturing operations, comprising the step of injecting a fracturing fluid into a conduit, wherein said fracturing fluid is an aqueous solution comprising at least one water soluble (co)polymer comprising less than 10 mol% ionic monomer(s) preferably less than 7 mol%. Additionally, the aqueous solution of this process comprises total dissolved salts (TDS) concentration of at least 100,000 mg/L to up to the salt concentration at which the aqueous solution becomes saturated in salts.

By hydraulic fracturing operations, we mean slick-water hydraulic fracturing operations as well as coiled tubing work-over operations as described above, in oilfield and gas-field.

The types of (co)polymers suitable for the processes and compositions of the present invention are preferably non ionic or contain less than 10 mol %, preferably less than 7 mol % ionic monomers. They broadly include any type of water-soluble (co)polymer, as this term is used in the art, including any non-ionic, anionic, cationic, or amphoteric polymer (copolymer comprising both anionic and cationic monomers). Suitable (co)polymers may be homopolymers or copolymers of vinyl addition or ethylenically unsaturated monomers which readily undergo addition polymerization.

The water soluble (co)polymer comprised in the aqueous solution used in the process according to the invention may comprise:
a) at least one monomer selected from non-ionic monomers based on acrylamide, acrylic, vinyl, allyl or maleic backbone and having a polar non-ionic side group: acrylamide, methacrylamide, hydroxyl alkyl esters of acrylic acid, hydroxyl alkyl esters of methacrylic acid, N-vinyl pyrrolidone, N-vinyl formamide, polyethelene glycol methacrylate, etc. In a preferred embodiment, the non ionic monomer is acrylamide;
b) and optionally
   (i) at least one anionic monomer based on an acrylamide, acrylic, vinyl, allyl or maleic backbone and having a carboxylic function (e.g.: acrylic acid, methacrylic acid and salts thereof), or having a sulfonic acid function (e.g.: allyl sulfonic acid and 2-acrylamido-2-methylpropane sulfonic acid (AMPS) and salts thereof); and/or
   (ii) at least one cationic monomer based on an acrylamide, acrylic, vinyl, allyl or maleic backbone and having an amine or quaternary ammonium function, mention can be made in particular, and without this being a limitation, of dimethylaminoethyl acrylate (ADAME) quaternized or salified and/or dimethylaminoethyl methacrylate (MADAME) quaternized or salified, dimethyldiallylammonium chloride (DADMAC), acrylamido propyltrimethyl ammonium chloride (APTAC) and/or methacrylamido propyltrimethyl ammonium chloride (MAPTAC);
   optionally combined with
c) a hydrophobic monomer based on an acrylamide, acrylic, vinyl, allyl or maleic backbone, having a side hydrophobic function selected from the group comprising derivatives of acrylamide such as N-alkylacrylamide for example diacetone acrylamide, isopropyl acrylamide, N-tert-butylacrylamide, octylacrylamide and also N,N-dialkylacrylamides such as N,N-dihexylacrylamide, N,N dimethylacrylamide, derivatives of acrylic acids such as alkyl acrylates or methacrylates. Also useable are vinyl monomers such as N-vinylformamide, N-vinyl acetamide, N-vinylpyridine, and N-vinylimidazole.

The molecular weight of the polymer of the invention can range from 1 to 30 million g/mol. In a preferred embodiment, the water soluble (co)polymer preferably exhibits a molecular weight in the range of 5-30 million, more preferably in the range of 10 to 25 million.

In a preferred embodiment, the water soluble copolymer comprises less than 10 mol % ionic monomer. In a more preferred embodiment, it comprises less than 7 mol % anionic and/or cationic monomers.

An even more preferred copolymer comprises less than 5 mol % anionic and/or cationic monomers.

In a most preferred embodiment, the water soluble (co)polymer of the invention is a non ionic polymer. Particularly preferred (co)polymers are homopolymer of acrylamide, copolymers of acrylamide and acrylic acid (less than 10% mol) and copolymers of acrylamide and dimethylaminoethyl acrylate (ADAME) quaternized or salified, dimethylaminoethyl methacrylate (MADAME) quaternized or salified, or propyltrimethyl ammonium chloride (APTAC) (less than 10% mol).

According to the invention, the water-soluble (co)polymers used do not require the development of a particular polymerization method. They can be obtained by all polymerization techniques well known to a person skilled in the art i.e. solution polymerization, suspension polymerization, gel polymerization with or without a cohydrolysis or post-hydrolysis step, precipitation polymerization, emulsion polymerization (aqueous or reverse) followed or not by a spray drying step, micellar polymerization followed or not by a precipitation step.

The preferred form of the polymer is as an inverse emulsion or a powder. The inverse emulsion form could be pre-hydrated (inversion of the emulsion) in fresh water or brine prior to addition in the very high salinity fluid. The powder is dissolved in fresh water or brine, preferably with a « Polymer Slicing Unit » (PSU), as described in the patent application WO 2008/107492 of the patentee.

An inverse emulsion typically refers to a water-in-oil emulsion and, as already said, pre-hydration refers to the act of inverting the inverse emulsion in fresh water or brine, and thereby allowing the polymer to fully dissolve into the aqueous solution, prior to dosing into the fracturing fluid.

Typically, the water soluble (co)polymer of the invention is used in an amount ranging from 0.005 to 0.3 wt% active water soluble (co)polymer by weight of the fracturing fluid, preferably from 0.01 to 0.15 wt% of the fracturing fluid. These dosages do not include polymer that may already be dissolved in flowback water since it will likely be degraded and not useful as a friction reducer.

Furthermore, the fracturing fluid comprises dissolved salts in the range of 100,000 to 500,000 mg/L, or up to the salt concentration at which the aqueous solution becomes saturated in salts, whichever is the higher.

In a preferred embodiment, the fracturing fluid comprises 150,000 to 500,000 mg/L of dissolved salts.

Dissolved salts may be comprised of but not limited to, the following ions: sodium, magnesium, calcium, potassium, strontium, barium, chloride, bromide, carbonate, bicarbonate and sulfate. Additionally, selected salts may be intentionally added to the fluid to increase density or perform some other function, for example clay stabilization; these may include, but are not limited to sodium chloride (NaCl), potassium chloride (KCI), calcium chloride (CaCl₂), sodium bromide (NaBr), calcium bromide (CaBr₂), zinc bromide (ZnBr₂), or a mixture thereof.

The invention and its advantages will become more apparent from the figures and examples that follow. Embodiments and examples are shown to illustrate the present invention, and not to limit it.

### BRIEF DESCRIPTION OF THE DRAWING FIGURES

Figures 1 and 3 show the percentage of friction reduction in CaCl₂ brine (500,000 mg/L), as a function of time, when the friction reducer is a prior art copolymer (copolymer of acrylic acid/acrylamide) or the polymer of the invention (homopolymer of acrylamide).
Figure 2 shows the percentage of friction reduction in CaCl₂ brine (400,000 mg/L), as a function of time, when the friction reducer is the polymer of the invention (homopolymer of acrylamide).
Figures 4-7 show the percentage of friction reduction in NaCl brine (110,000 to 350,000 mg/L), as a function of time, when the friction reducer is the polymer of the invention (homopolymer of acrylamide).

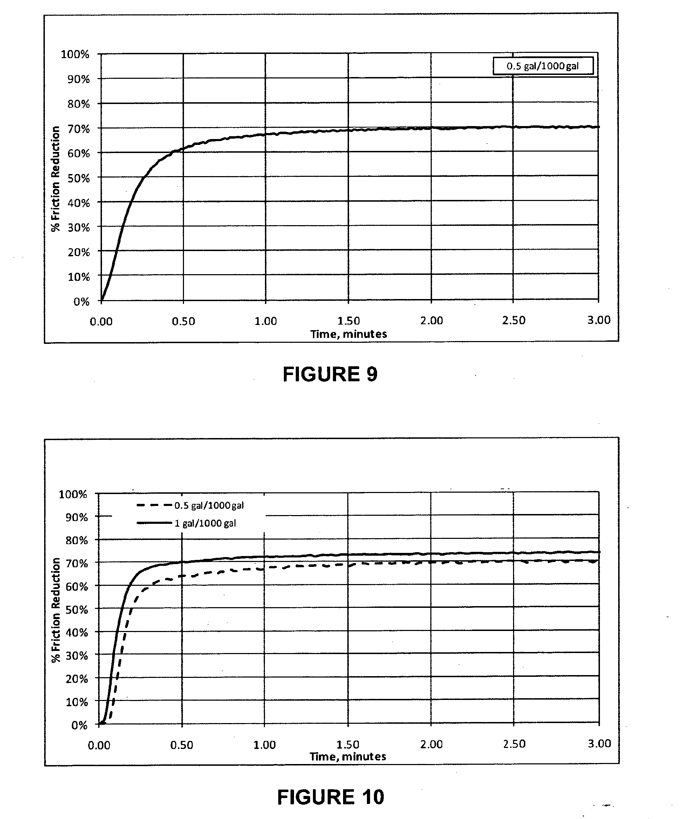

Figures 8 and 9 show the percentage of friction reduction in KCI brine (110,000 to 350,000 mg/L), as a function of time, when the friction reducer is the polymer of the invention (homopolymer of acrylamide).
Figures 10 shows the percentage of friction reduction in NaCl/CaCl₂ brine (110,000 mg/L), as a function of time, when the friction reducer is the polymer of the invention (homopolymer of acrylamide).

### EXAMPLES

The following examples have been prepared to illustrate some of the benefits offered by the invention. All friction or drag reduction data depicted herein have been calculated from data collected during tests carried out in a friction loop. The friction loop consists of a high flow rate triplex pump and pipe rig through which the desired brine is re-circulated. A mass flow meter was used to measure the flow rate, density and temperature of the fluid in real time, together with a differential pressure transducer measuring pressure drop over a 20-foot section of 3/8" OD (outside diameter) pipe.

### Comparative Examples (CE)

These examples are provided as gauge for the performance benefits offered by the invention, under the conditions outlined in the claims. In these particular cases, a conventional friction reducer was subjected to a very highly concentrated calcium chloride brine (500,000 mg/l in comparative example 1) and to a highly concentrated calcium chloride brine (150,000 mg/l in comparative example 2).

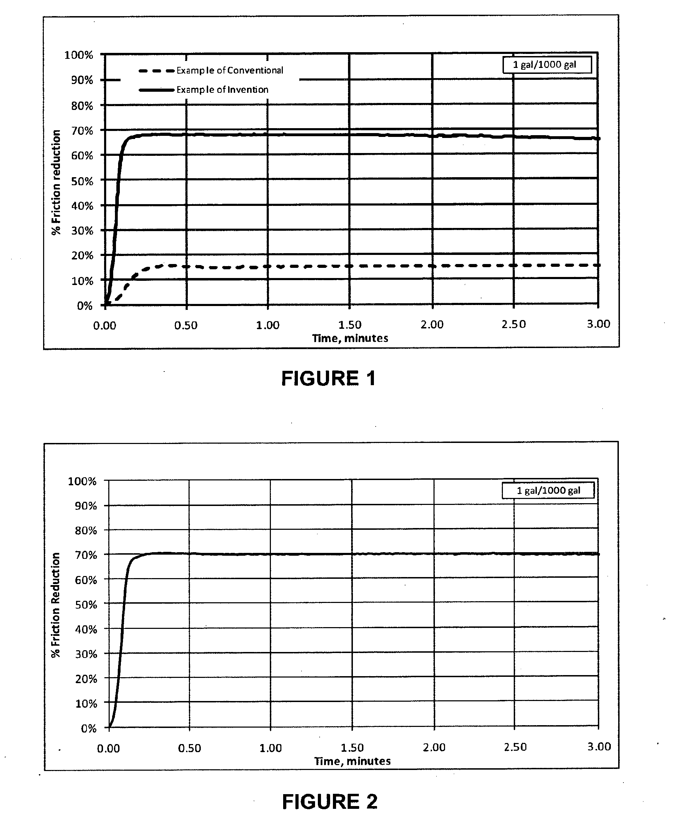

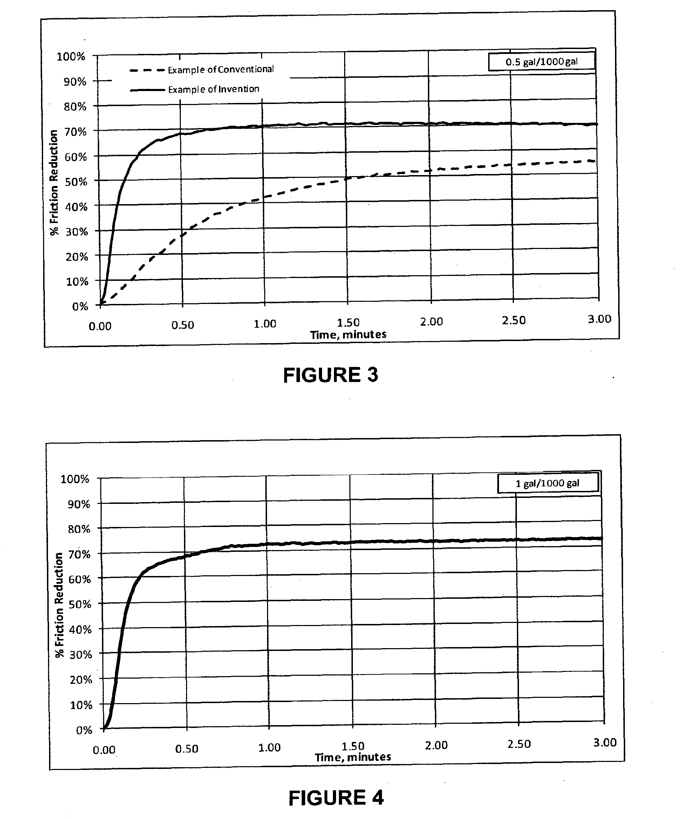

The conventional friction reducer is a copolymer of acrylamide (70 mol%) and acrylic acid (30 mol%) with a molecular weight of 15 million g/mol. From the curve generated with the conventional friction-reducing polymer, it can clearly be seen from the shape of the curves in Figure 1 and 3 that the rate of friction reduction onset is retarded by the high salinity of the brine, as evidenced by the shallow gradient of the initial section of the curve. Further to this and most importantly, the overall friction reduction attained is also significantly suppressed offering a maximum friction reduction of 15.8% in CE1 and 55.1 % in CE2.

In comparative examples, friction reducer dosage is 1.0 gal/1000 gal of brine or 0.5 gal/1000 gal of brine. For the products used in these examples, the dosages are equivalent to 0.03wt% and 0.015wt% active water soluble (co)polymer by weight of the fracturing fluid, respectively.

| **Comparative Examples** | ¹ CE 1 | CE 2 |
|---|---|---|
| | Figure 1 | Figure 3 |
| Brine: | CaCl₂ | CaCl₂ |
| Brine Concentration: | 500,000 mg/L | 150,000 mg/L |
| Friction Reducer Dosage: | 1.0 gal/1000 gal | 0.5 gal/1000 gal |
| Flow Rate: | 10 gpm | 10 gpm |
| Maximum Drag Reduction: | 15.8% | 55.1% |

| | | |
|---|---|---|
| ¹ Friction reducer was pre-hydrated prior to addition | | |

Examples 1 through 3 detail performance characteristics of the invention in the presence of calcium chloride. In this particular set of examples, the calcium chloride concentration is in the range of 150,000mg/l up to 500,000mg/l. In each of the examples, the respective calcium chloride brine was re-circulated through the friction loop at a flow rate of 10gpm (gallons per minute) in order to generate a baseline differential pressure. Once this baseline was attained, the appropriate measure of friction reducing water-soluble polymer, a homopolymer of acrylamide with a molecular weight of 15 million g/mol, was added directly to the tank and recirculation continued. The resulting reduction in differential pressure was then monitored and recorded in real time and the actual percentage friction reduction calculated. The only variation in procedure occurs in Examples 1 and 2, where the friction-reducing polymer was pre-hydrated prior to addition in order to eliminate the effect of the high calcium content on the inverting surfactant package, and thus enabling the effect of the polymer to be measured independently. Again, as outlined from the curves from the Figures 1, 2 and 3, this invention provides excellent friction reduction in these harsh environments.

In Examples 1 to 11, friction reducer dosage is 1.0 gal/1000 gal of brine or 0.5 gal/1000 gal of brine. For the products in these examples, these dosages are equivalent to 0.03 wt% and 0.015 wt% active water soluble (co)polymer by weight of the fracturing fluid, respectively.

| **Calcium Chloride Examples** | ¹Example 1 | ¹Example 2 | Example 3 |
|---|---|---|---|
| | Figure 1 | Figure 2 | Figure 3 |
| Brine: | CaCl₂ | CaCl₂ | CaCl₂ |
| Brine Concentration: | 500,000 mg/L | 400,000 mg/L | 150,000 mg/L |
| Friction Reducer Dosage: | 1.0 gal/1000 gal | 1.0 gal/1000 gal | 0.5 gal/1000 gal |
| Flow Rate: | 10 gpm | 10 gpm | 10 gpm |
| Maximum Drag Reduction: | 68.4% | 70.5% | 71.9% |

| | | | |
|---|---|---|---|
| ¹ Friction reducer was pre-hydrated prior to addition | | | |

Examples 4 through 7, inclusive, detail the performance of the invention in sodium chloride brines of various concentrations ranging from a near saturation level of 350,000mg/l in Example 4 down to 110,000mg/l in Example 7. Dose levels equivalent to either 0.5 or 1.0 gallons of friction reducer per 1000 gallons of fluid (GPT, gallons per thousand gallons) are shown. As with the previous examples, the brine in question was re-circulated through the friction loop in order to generate a baseline differential pressure, prior to the addition of the water-soluble friction-reducing polymer (the same as in example 1 to 3).

| **Sodium Chloride Examples** | Example 4 | Example 5 | Example 6 | Example 7 |
|---|---|---|---|---|
| | Figure 4 | Figure 5 | Figure 6 | Figure 7 |
| Brine: | NaCl | NaCl | NaCl | NaCl |
| Brine Concentration: | 350,000 mg/L | 300,000 mg/L | 150,000 mg/L | 110,000 mg/L |
| Friction Reducer Dosage: | 1.0 gal/1000 gal | 1.0 gal/1000 gal | 1.0 gal/1000 gal | 0.5 gal/1000 gal |
| Flow Rate: | 10 gpm | 10 gpm | 10 gpm | 10 gpm |
| Maximum Drag Reduction: | 73.1% | 72.6% | 73.0% | 71.3% |

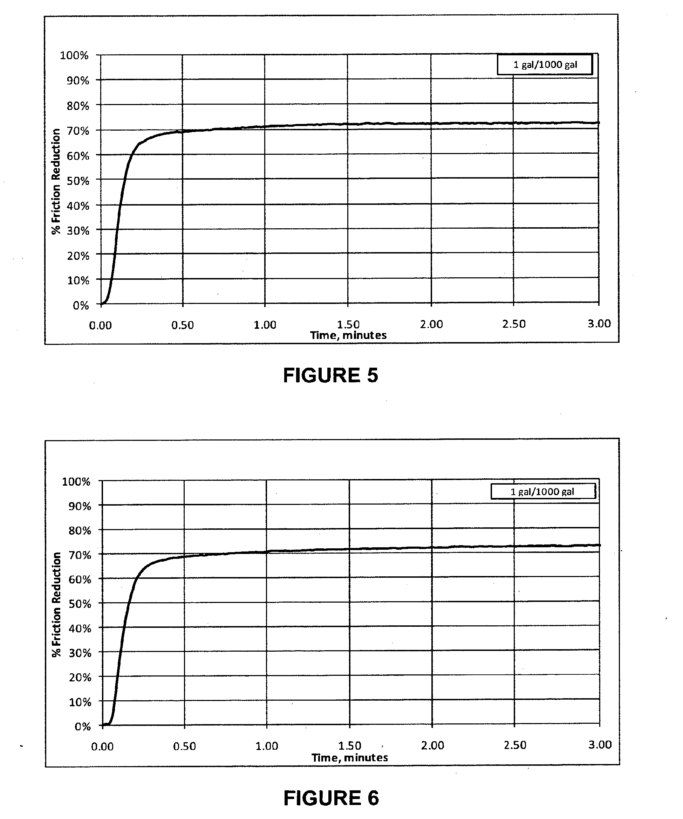

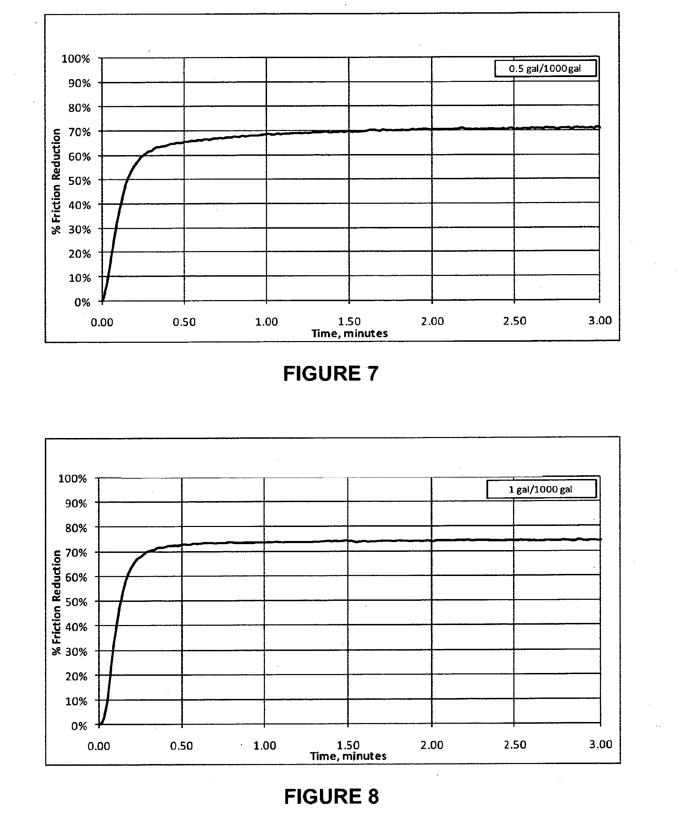

This invention provides excellent friction reduction in these high sodium chloride concentrated brines as Figures 4 to 7 show.

Examples 8 and 9 detail typical performance data in the presence of potassium chloride at levels ranging at 110,000mg/l and 350,000mg/l. As with the previous examples, these results again show good performance in terms of overall friction reduction. The polymer used is the same as in examples 1 to 3.

| **Potassium Chloride Examples** | Example 8 | Example 9 |
|---|---|---|
| | Figure 8 | Figure 9 |
| Brine: | KCI | KCI |
| Brine Concentration: | 350,000 mg/L | 110,000 mg/L |
| Friction Reducer Dosage: | 1.0 gal/1000 gal | 0.5 gal/1000 gal |
| Flow Rate: | 10 gpm | 10 gpm |
| Maximum Drag Reduction: | 74.5% | 70.0% |

Examples 10 and 11 show instances of brines containing both monovalent and divalent ions. In these cases, a brine of 11 0,000mg/l total dissolved solids consisting of 90,000mg/l sodium chloride and 20,000mg/l calcium chloride was used and treated with both 0.5GPT and 1.0GPT. It can be clearly seen that even at the lower dose level of 0.5GPT, excellent friction reduction numbers are obtained. The polymer used is the same as in examples 1 to 3.

| **Mixed Mono/Divalent Brine Examples** | Example 10 | Example 11 |
|---|---|---|
| | Figure 10 | Figure 10 |
| Brine: | NaCl/CaCl₂ | NaCl/CaCl₂ |
| Brine Concentration: | 90,000/20,000 mg/L | 90,000/20,000 mg/L |
| Friction Reducer Dosage: | 1.0 gal/1000 gal | 0.5 gal/1000 gal |
| Flow Rate: | 10 gpm | 10 gpm |
| Maximum Drag Reduction: | 73.5% | 70.2% |

## Claims

1. A process for reducing the fluid flow friction in hydraulic fracturing operations, comprising the step of injecting a fracturing fluid into a conduit, wherein said fracturing fluid is an aqueous solution comprising at least one water soluble (co)polymer comprising less than 10 mol% ionic monomer(s);
and wherein said aqueous solution comprises total dissolved salts concentration ranging from 100,000 mg/L to up to the salt concentration at which the aqueous solution becomes saturated in salts.

2. A process according to claim 1, wherein the fracturing fluid comprises from 0.005 to 0.3 wt% active water soluble (co)polymer by weight of the fracturing fluid.

3. A process according to claim 1, wherein the water soluble copolymer comprises at least one non-ionic monomer based on acrylamide, acrylic, vinyl, allyl or maleic backbone, and having a polar non-ionic side group.

4. A process according to claim 1, wherein the water soluble copolymer comprises at least one non-ionic monomer selected from the group consisting of acrylamide, methacrylamide, hydroxyl alkyl esters of acrylic acid, hydroxyl alkyl esters of methacrylic acid, N-vinyl pyrrolidone, N-vinyl formamide, and polyethelene glycol methacrylate.

5. A process according to claim 1, wherein the non-ionic monomer is acrylamide.

6. A process according to claim 1, wherein the water soluble copolymer comprises at least one anionic monomer selected from the group consisting of acrylic acid, methacrylic acid, allyl sulfonic acid, 2-acrylamido-2-methyl propane sulfonic acid, as free acids or salts thereof.

7. A process according to claim 1, wherein the water soluble copolymer comprises at least one cationic monomer selected from the group consisting of ADAME quaternized or salified, MADAME quaternized or salified, DADMAC, APTAC, MAPTAC.

8. A process according to claim 1, wherein the water soluble copolymer comprises less than 7 mol %, more preferably less than 5 mol% anionic and / or cationic monomer.

9. A process according to claim 1, wherein the water soluble copolymer is a non-ionic polymer.

10. A process according to claim 1, wherein the fracturing fluid comprises 150,000 to 500,000 mg/L of dissolved salts.

## Patentansprüche

1. Verfahren zur Verringerung der Strömungsreibung bei hydraulischen Aufbrechprozessen (Fracking), umfassend den Schritt des Einblasens einer Fracturing-Flüssigkeit (Fracking Fluid) in eine Rohrleitung, bei dem die Fracturing-Flüssigkeit eine wässrige Lösung mit zumindest einem wasserlöslichen (Co)polymer ist, das weniger als 10 Mol-% ionisches Monomer (ionische Monomere) einschließt;
und bei dem die wässrige Lösung eine Gesamtkonzentration gelöster Salze aufweist, die sich von 100 000 mg/l bis zu der Salzkonzentration bewegt, bei der die wässrige Lösung an Salzen gesättigt wird.

2. Verfahren nach Anspruch 1, bei dem die Fracturing-Flüssigkeit von 0,005 bis 0,3 Gew.-% aktives wasserlösliches (Co)polymer nach Gewicht der Fracturing-Flüssigkeit enthält.

3. Verfahren nach Anspruch 1, bei dem das wasserlösliche Copolymer zumindest ein nichtionisches Monomer auf Basis einer Acrylamid-, Acryl-, Vinyl-, Allyl- oder Maleinhauptkette enthält und eine polare, nichtionische Nebengruppe aufweist.

4. Verfahren nach Anspruch 1, bei dem das wasserlösliche Copolymer zumindest ein nichtionisches Monomer enthält, das aus der Gruppe ausgewählt ist, die aus Acrylsäureamid, Methacrylsäureamid, Hydroxylalkylestern der Acrylsäure, Hydroxylalkylestern der Methacrylsäure, N-Vinylpyrrolidon, N-Vinylformamid und Polyethylenglykolmethacrylat besteht.

5. Verfahren nach Anspruch 1, bei dem das nichtionische Monomer Acrylamid ist.

6. Verfahren nach Anspruch 1, bei dem das wasserlösliche Copolymer zumindest ein anionisches Monomer enthält, das aus der Gruppe ausgewählt ist, die aus Acrylsäure, Methacrylsäure, Allylsulfonsäure, 2-Acrylamid-2-methyl¬propan-sulfon¬säure als freie Säuren oder Salze davon besteht.

7. Verfahren nach Anspruch 1, bei dem das wasserlösliche Copolymer zumindest ein kationisches Monomer enthält, das aus der Gruppe ausgewählt ist, die aus ADAME, quaternisiert oder salzbildend gemacht; MADAME, quaternisiert oder salzbildend gemacht; DADMAC, APTAC, MAPTAC besteht.

8. Verfahren nach Anspruch 1, bei dem das wasserlösliche Copolymer weniger als 7 Mol-%, noch besser weniger als 5 Mol-% anionisches und / oder kationisches Monomer enthält.

9. Verfahren nach Anspruch 1, bei dem das wasserlösliche Copolymer ein nichtionisches Polymer ist.

10. Verfahren nach Anspruch 1, bei dem die Fracturing-Flüssigkeit 150 000 bis 500 000 mg/l gelöster Salze enthält.

## Revendications

1. Procédé pour réduire la friction d'écoulement de fluide dans des opérations de fracturation hydraulique, comprenant l'étape consistant à injecter un fluide de fracturation dans un conduit, dans lequel ledit fluide de fracturation est une solution aqueuse comprenant au moins un (co)polymère soluble dans l'eau contenant moins de 10 % molaires de monomère(s) ionique(s) ;
et dans lequel ladite solution aqueuse comprend une concentration de sels dissous totale comprise entre 100000 mg/l et la concentration de sels à laquelle la solution aqueuse devient saturée en sels.

2. Procédé selon la revendication 1, dans lequel le fluide de fracturation contient de 0,005 % en poids à 0,3 % en poids de (co)polymère actif soluble dans l'eau en poids du fluide de fracturation.

3. Procédé selon la revendication 1, dans lequel le copolymère soluble dans l'eau contient au moins un monomère non ionique basé sur une structure acrylamide, acrylique, vinyle, allyle ou maléique, et présentant un groupe latéral non ionique polaire.

4. Procédé selon la revendication 1, dans lequel le copolymère soluble dans l'eau comprend au moins un monomère non ionique qui est sélectionné dans le groupe comprenant l'acrylamide, le méthacrylamide, des esters d'alkyle hydroxyle d'acide acrylique, des esters d'alkyle hydroxyle d'acide méthacrylique, du N-vinyle pyrrolidone, du N-vinyle formamide et du polyéthylène glycol méthacrylate.

5. Procédé selon la revendication 1, dans lequel le monomère non ionique est l'acrylamide.

6. Procédé selon la revendication 1, dans lequel le copolymère soluble dans l'eau comprend au moins un monomère anionique qui est sélectionné dans le groupe comprenant l'acide acrylique, l'acide méthacrylique, l'acide allyle sulfonique, l'acide 2-acrylamido-2-méthyle propane sulfonique comme acides libres, ou des sels de ceux-ci.

7. Procédé selon la revendication 1, dans lequel le copolymère soluble dans l'eau comprend au moins un monomère cationique qui est sélectionné dans le groupe comprenant l'ADAME quaternisé ou salifié, le MADAME quaternisé ou salifié, le DADMAC, l'APTAC et le MAPTAC.

8. Procédé selon la revendication 1, dans lequel le copolymère soluble dans l'eau contient moins de 7 % molaires, mieux encore moins de 5 % molaires de monomère anionique et/ou cationique.

9. Procédé selon la revendication 1, dans lequel le copolymère soluble dans l'eau est un polymère non ionique.

10. Procédé selon la revendication 1, dans lequel le fluide de fracturation contient de 150000 mg/l à 500000 mg/l de sels dissous.
